# EUROPÄISCHE PATENTANMELDUNG

(11) **EP 4 403 813 A1**
(43) Veröffentlichungstag der Anmeldung: **24.07.2024**
(21) Anmeldenummer: 23152142.8
(22) Anmeldetag: 18.01.2023
(51) Int. Cl.: F16L 37/091

(54) **STECKEINSATZ**

(71) Anmelder: AVS, Ingenieur J.C. Römer GmbH, 94481 Grafenau (DE)
(72) Erfinder: SILBERBAUER, Günther, 94481 Grafenau (DE); GARHAMMER, Stefan, 94481 Grafenau (DE)
(74) Vertreter: Wolf, Gerhard

(57) **Zusammenfassung**

Die Erfindung betrifft einen Steckeinsatz ausgebildet zur Einbringung in einen Grundkörper (3), wobei der Steckeinsatz (1) zur lösbaren Kopplung eines rohrförmigen Elements (2) mit dem Grundkörper (3) ausgebildet ist, wobei der Steckeinsatz (1) eine Steckhülse (4), ein Fixierelement (5) und ein Löseorgan (6) umfasst, wobei das Fixierelement (5) zur lösbaren Fixierung eines über eine Einführöffnung (E) eingeschobenen, rohrförmigen Elements (2) in der Steckhülse (4) ausgebildet ist und das Löseorgan (6) mit dem Fixierelement (5) derart zusammenwirkt, dass durch eine axiale Verschiebung des Löseorgans (6) relativ zur Steckhülse (4) die Fixierung des rohrförmigen Elements (2) gelöst wird, wobei die Steckhülse (4) aus zumindest zwei in Umfangsrichtung aneinander anschließenden Steckhülsenelementen (4.1, 4.2) gebildet und durch die aneinander anschließenden Steckhülsenelemente (4.1, 4.2) zu einer geschlossenen, kreisringförmigen Steckhülse (4) zusammensetzbar ist, wobei die Steckhülsenelemente (4.1, 4.2) aus Kunststoff gebildet sind, wobei die Steckhülse (4) in deren Innenraum eine Fixierelementaufnahme (7) aufweist, mittels der das Fixierelement (5) im zusammengesetzten Zustand der Steckhülse (4) formschlüssig fixiert ist und wobei die Steckhülse (4) im zusammengesetzten Zustand eine Gleitführung für die axiale Verschiebung des Löseorgans (6) bildet.

## Beschreibung

Die Erfindung betrifft einen Steckeinsatz.

Steckeinsätze zur lösbaren Kopplung eines rohrförmigen Elements, beispielsweise eines Schlauchs oder eines Rohrs, mit einem Grundkörper, beispielsweise einem Gehäuse einer Rohrkupplung, eines Ventils, eines Sensors, einer Pumpe etc. sind bekannt, beispielsweise aus der anmeldereigenen Druckschrift DE 10 2018 121 440 A1.

Der bekannte Steckeinsatz weist eine in axialer Richtung gesehen zweiteilige Steckhülse bestehend aus einer Einpresshülse und einem Stützring, ein in der Steckhülse angeordnetes Fixierelement als Krallenring und ein Löseorgan auf, das mit dem Fixierelement derart zusammenwirkt, dass beim Eindrücken des Löseorgans in die Steckhülse die Krallen des Fixierelements deformiert werden und damit das rohrförmige Element aus dem Grundkörper herausgezogen werden kann.

Die Einpresshülse und der Stützring sind bei bekannten Steckeinsätzen aus einem Metall, beispielsweise aus Edelstahl oder aus Messing gefertigt.

Ein wesentlicher Nachteil des bekannten Steckeinsatzes besteht darin, dass die Herstellung und das Zusammenfügen der Einzelteile des Steckeinsatzes sehr aufwendig und teuer sind. Bislang muss die Steckhülse bzw. deren Einzelteile mittels spanender Bearbeitung hergestellt und anschließend zusammengesetzt werden. Ferner müssen die Steckhülse bzw. deren Einzelteile oftmals auch galvanisch beschichtet werden, um diese gegen Korrosion zu schützen. Speziell bei Steckeinsätzen zur Fixierung von Schläuchen oder Rohren mit einem relativ großen Durchmesser, beispielsweise einem Schlauch- oder Rohrdurchmesser größer als 10mm, sind die Herstellungskosten auch aufgrund des hohen Metallbedarfs für die Steckhülse hoch.

Ausgehend hiervon ist es Aufgabe der Erfindung, einen Steckeinsatz anzugeben, bei dem der Herstellungs- und Montageaufwand reduziert ist, so dass die Herstellungskosten gesenkt werden können.

Die Aufgabe wird durch einen Steckeinsatz mit den Merkmalen des unabhängigen Patentanspruchs 1 gelöst. Bevorzugte Ausführungsformen sind Gegenstand der Unteransprüche.

Gemäß einem ersten Aspekt wird ein Steckeinsatz offenbart. Der Steckeinsatz ist zur Einbringung in einen Grundkörper und zur lösbaren Kopplung eines rohrförmigen Elements mit dem Grundkörper ausgebildet. Das rohrförmige Element kann insbesondere ein Schlauch oder ein Rohr mit kreisrundem Querschnitt sein. Besonders bevorzugt ist der Steckeinsatz zur Kopplung eines Telekommunikationsleerrohrs mit dem Grundkörper einer rohrförmigen Telekommunikationskupplung ausgebildet.

Der Steckeinsatz umfasst eine Steckhülse, ein Fixierelement und ein Löseorgan, das als ein das rohrförmige Element umfangsseitig umgebender Lösering ausgebildet sein kann. Das Fixierelement ist zur lösbaren Fixierung des über eine Einführöffnung eingeschobenen, rohrförmigen Elements in der Steckhülse ausgebildet. Das Löseorgan wirkt mit dem Fixierelement derart zusammen, dass durch eine axiale Verschiebung des Löseorgans relativ zur Steckhülse die Fixierung des rohrförmigen Elements gelöst wird.

Die Steckhülse ist aus zumindest zwei in Umfangsrichtung aneinander anschließenden Steckhülsenelementen gebildet und durch die aneinander anschließenden Steckhülsenelemente zu einer geschlossenen, im Querschnitt kreisringförmigen Steckhülse zusammensetzbar. Die Steckhülsenelemente sind aus Kunststoff gefertigt. Insbesondere sind die Steckhülsenelemente schalenartig ausgebildet und bilden jeweils ein Wandungssegment der Steckhülse, das in Umfangsrichtung gesehen einen Teilwinkelbereich überspannt. Besonders bevorzugt sind die Steckhülsenelemente halbschalenförmig oder im Wesentlichen halbschalenförmig ausgebildet.

Die Steckhülse weist in deren Innenraum eine Fixierelementaufnahme auf, mittels der das Fixierelement im zusammengesetzten Zustand der Steckhülse formschlüssig fixiert ist. Die Steckhülse bildet zudem im zusammengesetzten Zustand eine Gleitführung für die axiale Verschiebung des Löseorgans, d.h. die Außenwandung des Löseorgans liegt beispielsweise zumindest partiell an der Innenwandung der Steckhülse an, so dass durch die Steckhülse eine geführte Verschiebbarkeit des Löseorgans ermöglicht wird.

Der technische Vorteil des Steckeinsatzes besteht darin, dass durch die Segmentierung der Steckhülse in Umfangsrichtung die Möglichkeit geschaffen wird, in ein Steckhülsenelement zunächst das Fixierelement einzusetzen und anschließend dann durch Aufsetzen zumindest eines weiteren Steckhülsenelements die Steckhülse umfangsseitig zu schließen, so dass der umfangsseitig geschlossene Steckeinsatz in den Grundkörper einbringbar ist. Die Herstellung der Steckhülsenelemente aus Kunststoff ermöglicht eine im Vergleich zu einer metallischen Steckhülse günstige Herstellung. Dies gilt insbesondere bei Steckeinsätzen für Schlauch- oder Rohrdurchmesser von 10mm oder größer. Ein weiterer Vorteil des Steckeinsatzes besteht darin, dass das Löseorgan nicht in die Steckhülse eingepresst werden muss, sondern sich aufgrund der Mehrteiligkeit der Steckhülse vor dem Zusammensetzen in diese einbringen lässt. Dadurch kann die Bildung von Spänen, die durch Abschabungen beim Einpressen entstehen können, verhindert werden.

Gemäß einem Ausführungsbeispiel weisen die Steckhülsenelemente Verbindungsmittel auf, mittels denen diese im zusammengesetzten Zustand derart relativ zueinander fixiert werden, dass diese im Zusammenwirken miteinander die umfangsseitig geschlossene Steckhülse bilden. Die Verbindungsmittel können beispielsweise an den Fügeflächen der Steckhülse vorgesehen sein, die beim Zusammensetzen der Steckhülsenelemente gegeneinander zur Anlage gelangen. Die Verbindungsmittel können beispielsweise zumindest eine Zapfenverbindung und/oder zumindest eine Rastverbindung umfassen. Durch die Verbindungsmittel werden die Steckhülsenelemente nach dem Zusammensetzen gegeneinander lagemäßig fixiert, so dass die Steckhülse, die durch das Zusammensetzen der Steckhülsenelemente entsteht, gegen ein unerwünschtes Auseinanderfallen gesichert ist.

Gemäß einem Ausführungsbeispiel ist die Steckhülse in Umfangsrichtung segmentiert und in axialer Richtung nicht segmentiert. In anderen Worten wird durch die Steckhülsenelemente jeweils ein Abschnitt der Steckhülse gebildet, der in Umfangsrichtung gesehen einen Winkelsektor der Steckhülse bildet. In axialer Richtung, d.h. in der Richtung, in der das Einschieben des rohrförmigen Elements in die Steckhülse erfolgt, erstreckt sich das Steckhülsenelement über die gesamte Länge der Steckhülse, d.h. in axialer Richtung ist die Steckhülse nicht mehrteilig ausgebildet.

Gemäß einem Ausführungsbeispiel sind die Steckhülsenelemente identisch ausgebildete Teile. Dadurch wird die Herstellung der Steckhülse vereinfacht, da mehr Gleichteile bestehen und beim Zusammenstellen der Teile des Steckeinsatzes nicht zwischen unterschiedlich geformten Steckhülsenelementen unterschieden werden muss.

Gemäß einem Ausführungsbeispiel weist ein erstes Steckhülsenelement an einer Fügefläche, an der das erste Steckhülsenelement mit einem zweiten Steckhülsenelement zur Anlage gelangt, zumindest eine sacklochartige Ausnehmung und/oder einen Zapfen auf, wobei die sacklochartige Ausnehmung des ersten Steckhülsenelements mit einem Zapfen des zweiten Steckhülsenelements und/oder der Zapfen des ersten Steckhülsenelements mit einer Ausnehmung des zweiten Steckhülsenelements zur Bildung einer formschlüssigen Verbindung zusammenwirkt. Der Zapfen und die Ausnehmung sind dabei vorzugsweise derart relativ zueinander dimensioniert, dass eine kraftschlüssige Verbindung zwischen dem Zapfen und der Ausnehmung entsteht. Insbesondere lässt sich der Zapfen unter Krafteinwirkung in die Ausnehmung eindrücken, so dass die dadurch entstehende kraftschlüssige Verbindung ein unerwünschtes Auseinanderfallen der Steckhülsenelemente verhindert.

Gemäß einem Ausführungsbeispiel weist die Steckhülse außenumfangsseitig zumindest einen Rastabschnitt auf, mittels der der Steckeinsatz in dem Grundkörper rastend fixierbar ist. Der Grundkörper kann beispielsweise im Bereich dessen Innenwandung eine Hinterschneidung oder eine die Innenwandung vollständig durchdringende Öffnung aufweisen, deren Rand von dem Rastabschnitt hintergriffen wird. Dadurch kann eine formschlüssige Fixierung der Steckhülse in dem Grundkörper erfolgen.

Gemäß einem Ausführungsbeispiel ist die Fixierelementaufnahme in den Steckhülsenelementen jeweils durch eine Ausnehmung gebildet ist, in die das Fixierelement randseitig mit einem Teilumfangsbereich einsetzbar ist, und zwar derart, dass ein außenumfangsseitiger Randabschnitt des Fixierelements in die Ausnehmung eintaucht und dadurch das Fixierelement im zusammengesetzten Zustand der Steckhülse durch Zusammenwirken der Steckhülsenelemente fixiert ist.

Gemäß einem Ausführungsbeispiel weist das Löseorgan einen Hülsenabschnitt auf. Die Gleitführung des Löseorgans wird durch ein Zusammenwirken des Hülsenabschnitts des Löseorgans mit einem Führungsabschnitt der Steckhülse gebildet. Der Führungsabschnitt umschließt dabei den Hülsenabschnitt des Löseorgans umfangsseitig. Der Hülsenabschnitt des Löseorgans und der Führungsabschnitt der Steckhülse sind relativ zueinander derart dimensioniert, dass eine verkantungsfreie Verschiebung des Löseorgans relativ zur Steckhülse ermöglicht wird. Damit kann eine vorteilhafte Führung des Löseorgans in der Steckhülse sichergestellt werden.

Gemäß einem Ausführungsbeispiel weist das Löseorgan außenseitig zumindest einen Rastabschnitt auf. Die zumindest zwei Steckhülsenelemente weisen an deren Innenumfangsfläche jeweils eine Ausnehmung auf, die mit dem Rastabschnitt des Löseorgans derart zusammenwirkt, dass der Rastabschnitt in die Ausnehmung eingreift, um dadurch den Verschiebeweg des Löseorgans zu beschränken. Insbesondere hintergreift der Rastabschnitt eine durch die Ausnehmung gebildete Hinterschneidung. Dadurch wird der Verschiebeweg des Löseorgans begrenzt, insbesondere derart, dass das Löseorgan nicht in unerwünschter Weise aus der Steckhülse herausgelöst werden kann.

Gemäß einem Ausführungsbeispiel weist die Steckhülse im Bereich des freien Endes, das der Einführöffnung gegenüberliegt, eine Anlagefläche für eine Dichtung auf, mittels der der Übergang zwischen dem rohrförmigen Element und dem Grundkörper abgedichtet wird. Dadurch kann eine in den Grundkörper eingesetzte Dichtung durch das freie Ende der Steckhülse in ihrer Einbaulage fixiert werden.

Alternativ ist es möglich, dass die Steckhülse eine Aufnahme für die Dichtung aufweist. Beispielsweise kann die Dichtung formschlüssig in der Steckhülse aufgenommen sein. Hierzu können die Steckhülsenelemente jeweils eine Ausnehmung aufweisen, in die ein Teilumfangsbereich des Randes der Dichtung einsetzbar ist, so dass die Dichtung bereits beim Zusammenfügen der Steckhülsenelemente zur Steckhülse in den Steckeinsatz eingebracht werden kann.

Gemäß einem Ausführungsbeispiel ist die Steckhülse zwischen der Fixierelementaufnahme und dem freien Ende, das der Einführöffnung gegenüberliegt, innenseitig zulaufend ausgebildet ist, so dass sich der Innenquerschnitt der Steckhülse zum freien Ende hin verjüngt. Dadurch kann eine Führungskontur für das einzuschiebende rohrförmige Element und eine verbreiterte Anlagefläche für die Dichtung geschaffen werden. Des Weiteren wird durch die Verjüngung der notwendige Freiraum geschaffen, in den die Krallen beim Verschieben des Löseorgans und dem damit verbundenen Lösen der Verbindung zwischen dem Fixierelement und dem rohrförmigen Element hineingebogen werden können.

Gemäß einem Ausführungsbeispiel weist das Löseorgan im Bereich des freien Endes, das in der Steckhülse aufgenommen ist, einen oder mehrere Trennschnitte auf, die die Wandung des Löseorgans durchtrennen und damit eine freiendseitige Segmentierung des Löseorgans bewirken. Durch die Trennschnitte kann das freie Ende des Löseorgans derart reversibel oder federwirkend verformt werden, dass dieses in axialer Richtung insbesondere werkzeuglos in die Steckhülse eingedrückt werden kann. Nach dem Einschieben können sich die durch die Trennschnitte erzeugten freiendseitigen Segmente des Löseorgans reversibel zurückverformen, so dass der zumindest eine Rastabschnitt des Löseorgans eine innenseitig an der Steckhülse gebildete Hinterschneidung hintergreift und damit gegen unerwünschtes Herauslösen gesichert ist.

Alternativ zum Einschieben des Löseorgans nach dem Zusammensetzen der Steckhülse kann das Löseorgan bereits vor dem Zusammensetzen der Steckhülse in ein Steckhülsenelement eingelegt werden, so dass das Löseorgan nach dem Zusammensetzen der Steckhülse bereits in den Steckeinsatz integriert ist.

Gemäß einem Ausführungsbeispiel sind der Grundkörper, das Löseorgan und/oder die Steckhülse aus einem transparenten Kunststoff gebildet. Dadurch ist der Grundkörper und/oder der Steckeinsatz durchsichtig oder zumindest transluzent, so dass durch das Löseorgan und die Steckhülse hindurch das in den Steckeinsatz eingeführte, bis zum Anschlag des Grundkörpers eingeschobene rohrförmige Element oder, im Falle eines transluzenten rohrförmigen Elements, ein in dem rohrförmigen Element geführte Leitung sichtbar ist. Dies ist insbesondere beim Einsatz des Steckeinsatzes in Telekommunikationskupplungen vorteilhaft, da es hier gewünscht ist, eine in dem rohrförmigen Element geführte Telekommunikationsleitung durch die Wandung der Telekommunikationskupplung hindurch erkennen zu können.

Gemäß einem Ausführungsbeispiel ist das Fixierelement als Krallenring ausgebildet, der mehrere von einem Randabschnitt radial nach innen abstehende Krallen aufweist, die sich zur Fixierung des rohrförmigen Elements mit der Wandung des rohrförmigen Elements verhaken und durch das Löseorgan derart reversibel oder federwirkend verbiegbar sind, dass dadurch die Fixierung des rohrförmigen Elements gelöst wird. Durch dieses Fixierelement kann eine sichere Fixierung des rohrförmigen Elements in der Steckhülse erreicht werden.

Gemäß einem Ausführungsbeispiel ist das Fixierelement durch Stanzen, Biegen und Umformen aus einem metallischen Flachmaterial hergestellt. Dadurch weist das Fixierelement eine hohe Stabilität auf und kann kostengünstig hergestellt werden.

Gemäß einem weiteren Aspekt wird eine Telekommunikationskupplung offenbart. Die Telekommunikationskupplung weist einen transparenten, rohrförmigen Grundkörper auf, in dessen Enden jeweils ein zuvor beschriebener Steckeinsatz einbringbar ist. Der rohrförmige Grundkörper ist vorzugsweise ebenfalls durch einen transparenten oder transluzenten Kunststoff gebildet.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand mehrerer Figuren an Ausführungsbeispielen näher erläutert. Es zeigen:
- Fig. 1: beispielhaft eine Längsschnittdarstellung einer Rohrkupplung mit zwei Steckeinsätzen zur Verbindung der freien Enden zweier rohrförmiger Elemente;
- Fig. 2: beispielhaft und in einer ersten Ansicht ein Steckeinsatz umfassend zwei Steckhülsenelemente in einer teilweisen Explosionsdarstellung;
- Fig. 3: beispielhaft und in einer zweiten Ansicht der Steckeinsatz der Fig. 2 in einer weiteren teilweisen Explosionsdarstellung;
- Fig. 4: beispielhaft ein Paar von Steckhülsenelementen, die zur Bildung einer Steckhülse miteinander verbindbar sind; und
- Fig. 5: beispielhaft eine Schnittdarstellung einer Anordnung eines Löseorgans und eines Fixierelements entlang der Längsachse des Löseorgans.

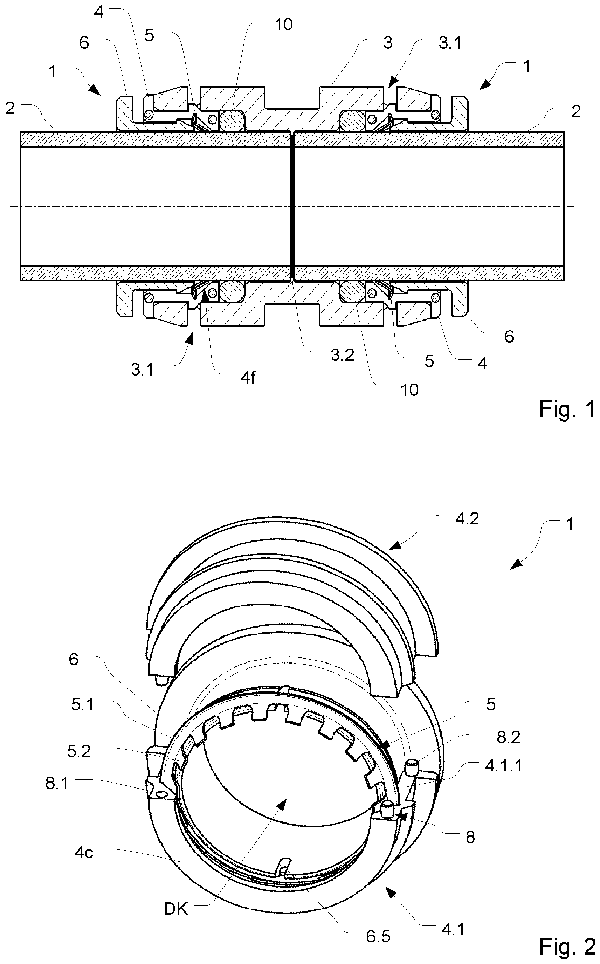

Figuren 1 und 2 zeigen eine Rohr- oder Schlauchkupplung zur Verbindung der freien Enden zweier rohrförmiger Elemente 2. Das rohrförmige Element 2 kann beispielsweise ein Schlauch oder ein Rohr mit kreisrundem Querschnitt sein. Die Rohr- oder Schlauchkupplung weist einen Grundkörper 3 und zwei in die offenen Enden des Grundkörpers 3 eingesetzte Steckeinsätze 1 auf. Die Steckeinsätze 1 dienen jeweils der lagemäßigen Fixierung eines rohrförmigen Elements 2 im Grundkörper 3, so dass über die Rohr- oder Schlauchkupplung eine feste aber zerstörungsfrei lösbare Verbindung zwischen den rohrförmigen Elementen 2 hergestellt wird. Alternativ kann der Grundkörper 3 beispielsweise ein Gehäuse eines Ventils, eines Verteilers, eines Sensors, einer Pumpe etc. sein. Bevorzugt ist die Anwendung des nachfolgend beschriebenen Steckeinsatzes 1 in einer Telekommunikationskupplung, in der die freien Enden zweier Telekommunikationsleerrohre miteinander verbindbar sind. Der Grundkörper 3 weist hierzu im Inneren einen doppelseitigen Anschlag 3.2 auf, gegenüber dem die rohrförmigen Elemente 2 stirnseitig zur Anlage gebracht werden können.

Der Steckeinsatz 1 bildet ein Kopplungsstück zwischen dem rohrförmigen Element 2 und dem Grundkörper 3. Er ist dazu ausgebildet, in eine Öffnung des Grundkörpers 3 eingefügt zu werden. Im Inneren des Steckeinsatzes 1 ist ein Aufnahmeraum ausgebildet, in den ein freies Ende des rohrförmigen Elements 2 einfügbar und lösbar fixierbar ist, so dass durch die Fixierung des Steckeinsatzes 1 im Grundkörper 3 und die Fixierung des rohrförmigen Elements 2 in dem Steckeinsatz 1 das rohrförmige Element 2 im Grundkörper 3 lösbar gehalten wird. Zur Abdichtung des Übergangs zwischen dem rohrförmigen Element 2 und dem Grundkörper 3 ist eine Dichtung 10 vorgesehen. Die Dichtung 10 kann, wie in Fig. 1 gezeigt, ein O-Ring sein. Alternativ kann sie als Elastomer-Formteil ausgebildet sein, das eine von der Ringform abweichende Grundform hat.

Der Steckeinsatz 1 umfasst eine Steckhülse 4, ein Fixierelement 5 und ein Löseorgan 6. Die Steckhülse 4 ist hohlkörperartig ausgebildet und bildet zumindest abschnittsweise die umfangsseitige Wandung des Steckeinsatzes 1 aus. Die Steckhülse 4 weist an einem ersten freien Ende eine Einführöffnung E auf, über die das rohrförmige Element 2 in den Steckeinsatz 1 einführbar ist. An die Einführöffnung E anschließend ist im Inneren der Steckhülse 4 ein Durchführkanal DK gebildet, in den das rohrförmige Element 2 einschiebbar ist. Der Durchführkanal DK wird in radialer Richtung gesehen (radial in Bezug auf die Einschubrichtung des rohrförmigen Elements 2) in einem ersten Bereich des Steckeinsatzes 1 durch das Löseorgan 6 und in einem zweiten Bereich durch die Steckhülse 4 begrenzt.

Im Inneren der Steckhülse 4 ist das Fixierelement 5 aufgenommen. Das Fixierelement 5 ist dazu ausgebildet, das rohrförmige Element 2 in axialer Richtung im Steckeinsatz 1 zu verankern. Im gezeigten Ausführungsbeispiel ist das Fixierelement 5 ein ringartiges Element. Außenumfangsseitig ist das Fixierelement 5 in der Steckhülse 4 durch einen Formschluss fixiert. In der gezeigten Ausführungsform taucht der außenumfangsseitig vorgesehene Randabschnitt 5.1 des Fixierelements 5 in eine innenumfangsseitig vorgesehene Fixierelementaufnahme 7 der Steckhülse 4 ein, die beispielsweise durch eine Sicke gebildet wird. Dadurch wird das Fixierelement 5 in axialer Richtung in der Steckhülse 4 gehalten.

Das Fixierelement 5 weist am innenliegenden Rand mehrere Krallen 5.2 auf. Das Fixierelement 5 ist beispielswiese scheibenartig und insbesondere als Krallenring ausgebildet. Die Krallen 5.2 sind um eine Durchführöffnung des Fixierelements 5 angeordnet. Der Durchmesser der Durchführöffnung ist kleiner als der Außendurchmesser des rohrförmigen Elements 2, so dass die Krallen 5.2 beim Einschieben des rohrförmigen Elements 2 in Einführrichtung verformt werden und nach Erreichen einer finalen Einschubposition in der Wandung des rohrförmigen Elements 2 eingreifen. Dadurch bewirkt das Fixierelement 5, dass sich das rohrförmige Element 2 nicht in unerwünschter Weise aus dem Steckeinsatz 1 herauslösen kann.

Das Löseorgan 6 ist dazu ausgebildet, das Eingreifen der Krallen 5.2 des Fixierelements 5 in das rohrförmige Element 2 zu lösen, so dass das rohrförmige Element 2 wieder aus dem Steckeinsatz 1 herausgezogen werden kann. Das Löseorgan 6 ist vorzugsweise hülsenförmig ausgebildet und weist im Inneren einen Durchführkanal auf, durch den das rohrförmige Element 2 hindurchschiebbar ist.

Das Löseorgan 6 ist axial verschiebbar in der Steckhülse 4 geführt. Das in der Steckhülse 7 liegende freie Ende des Löseorgans 6 bildet einen Randabschnitt 6.1, der zum Zusammenwirken mit den Krallen 5.2 des Fixierelements 6 ausgebildet ist, und zwar derart, dass das freie Ende des Löseorgans 6 beim axialen Einschieben die Krallen 5.2 in Einschieberichtung nach unten drückt und dadurch das Eingreifen der Krallen 5.2 in die Wandung des rohrförmigen Elements 2 aufgehoben wird.

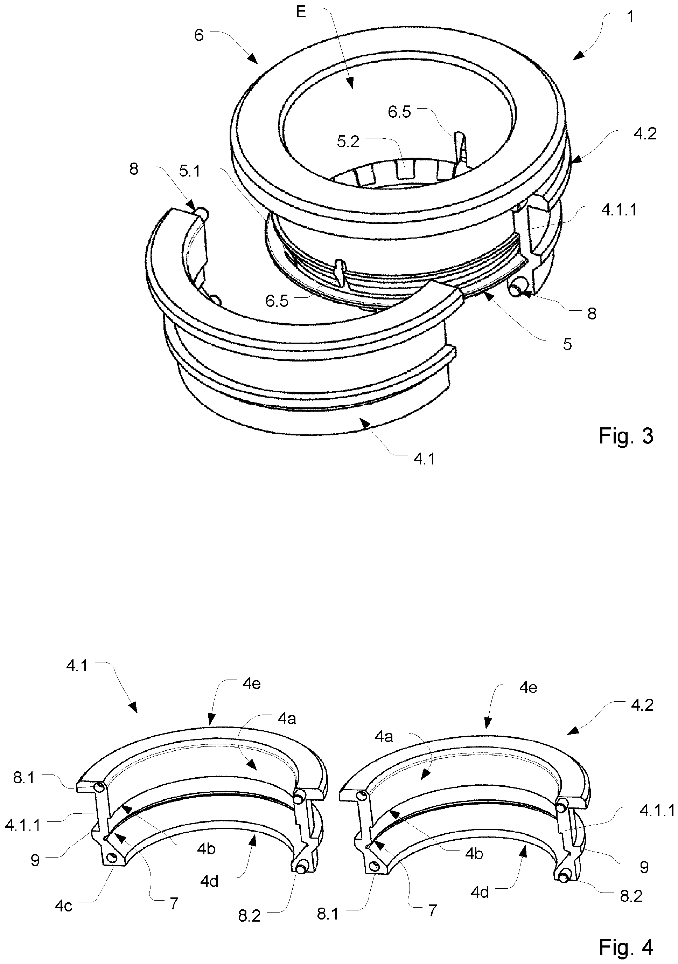

Wie in den Figuren 2 bis 4 ersichtlich, ist die Steckhülse 4 mehrteilig ausgebildet, und zwar aus mindestens zwei Steckhülsenelementen zusammengesetzt. Die Steckhülse 4 ist damit in Umfangsrichtung gesehen segmentiert ausgebildet. Die gezeigte Ausführungsform weist ein erstes und ein zweites Steckhülsenelement 4.1, 4.2 auf. Vorzugsweise sind die Steckhülsenelemente 4.1, 4.2 halbschalenförmig oder im Wesentlichen halbschalenförmig ausgebildet. Insbesondere können die Steckhülsenelemente 4.1, 4.2 identische Teile sein, was die Fertigung der Steckhülse 4 bzw. das Zusammensetzen des Steckeinsatzes 1 vereinfacht. Die Steckhülsenelemente 4.1, 4.2 lassen sich derart zusammensetzen, dass im zusammengesetzten Zustand eine umfangsseitig geschlossene Steckhülse 4 gebildet wird.

Die Steckhülsenelemente 4.1, 4.2 weisen vorzugsweise Verbindungsmittel auf, die dazu ausgebildet sind, die Steckhülsenelemente 4.1, 4.2 nach deren Zusammensetzen gegeneinander derart zu fixieren, dass ein unerwünschtes Auseinanderfallen der entstehenden Steckhülse 4 vermieden wird. Die Verbindungsmittel können beispielsweise durch eine Steck- oder Rastverbindung gebildet sein, die die Steckhülsenelemente 4.1, 4.2 nach dem Zusammensetzen in deren Relativlage zueinander sichert. Die Verbindungsmittel können insbesondere an den Fügeflächen 4.1.1 der Steckhülsenelemente 4.1, 4.2 vorgesehen sein.

Im gezeigten Ausführungsbeispiel sind die Verbindungsmittel durch Zapfenverbindungen 8 gebildet. Jeweils zumindest eine Zapfenverbindung 8 ist an den Fügestellen der Steckhülse 4 vorgesehen. Eine Zapfenverbindung wird jeweils durch eine Ausnehmung 8.1 und einen Zapfen 8.2 gebildet. Im gezeigten Ausführungsbeispiel weisen die Steckhülsenelemente 4.1, 4.2 an einer ersten Fügefläche 4.1.1 ein Paar von Zapfen 8.2 und an einer zweiten, diametral gegenüberliegenden Fügefläche 4.1.1 mit den Zapfen 8.2 korrespondierende Ausnehmungen 8.1 auf.

Die Dimensionierung der Ausnehmungen 8.1 und der Zapfen 8.2 ist derart gewählt, dass die Zapfen 8.2 passgenau aber klemmend in die Ausnehmungen 8.1 einschiebbar sind. Die Dimensionierung der Ausnehmungen 8.1 und der Zapfen 8.2 kann insbesondere derart gewählt sein, dass das Zusammensetzen der Steckhülsenelemente 4.1, 4.2 werkzeugfrei erfolgen kann. Die Passung der Ausnehmungen 8.1 und der Zapfen 8.2 verhindert jedoch ein unerwünschtes Lösen der Verbindung der Steckhülsenelemente 4.1, 4.2.

Die Segmentierung der Steckhülse 4 in Umfangsrichtung ermöglicht es, dass zunächst in ein erstes Steckhülsenelement 4.1 das Fixierelement 5 eingesetzt werden kann und anschließend erst das zumindest eine weitere Steckhülsenelement 4.2 aufgesetzt und mit dem ersten Steckhülsenelement 4.1 verbunden wird. Das Löseorgan 6 kann entweder ebenfalls vor dem Zusammensetzen der Steckhülsenelemente 4.1, 4.2 eingebracht werden oder erst nach deren Zusammensetzen in die Steckhülse 4 eingedrückt werden.

Die Steckhülse 4 weist vorzugsweise an dem freien Ende 4e einen in radialer Richtung verbreiterten Randabschnitt auf, der beim Einsetzen der Steckhülse in den Grundkörper 3 den Rand des Grundkörpers 3 überspannt. An das freie Ende 4e schließt sich ein Führungsabschnitt 4a an, der eine Gleitführung für das Löseorgan 6 bildet. Durch diesen Führungsabschnitt 4a wird das Löseorgan 6 verkantungsfrei axial geführt (axial in Bezug auf die Einschieberichtung des rohrförmigen Elements 2).

An den Führungsabschnitt 4a in Einschieberichtung anschließend ist eine Ausnehmung 4b vorgesehen. Die Ausnehmung 4b ist vorzugsweise umlaufend ausgebildet. Durch die Ausnehmung 4b wird eine Hinterschneidung mit einer Kante gebildet. In die Ausnehmung 4b greift ein Rastabschnitt 6.2 des Löseorgans 6 ein. Insbesondere bildet die Kante der Ausnehmung 4b eine Anlagefläche für den Rastabschnitt 6.2 des Löseorgans 6, so dass ein Herausschieben des Löseorgans 6 entgegen der Einschieberichtung des rohrförmigen Elements 2 verhindert wird.

An die Ausnehmung 4b schließt sich in Einschieberichtung des rohrförmigen Elements 2 die Fixierelementaufnahme 7 an. Die Fixierelementaufnahme 7 wird beispielsweise durch eine umflaufende Sicke oder Einkerbung gebildet, die den Randabschnitt 5.1 des Fixierelements 5 formschlüssig aufnimmt.

Die Steckhülse 4 weist vorzugsweise an die Fixierelementaufnahme 7 in Einschieberichtung anschließend einen konisch zulaufenden Bereich auf. Dadurch wird zum einen ein Aufnahmeraum für die vom Fixierelement 5 abstehenden Krallen 5.2 und ein Freiraum 4f zum Aufbiegen der Krallen 5.2 zum Lösen des Eingriffs der Krallen 5.2 in die Wandung des rohrförmigen Elements 2 gebildet, zum anderen bildet sich ein Führungsabschnitt für das einzuschiebende rohrförmige Element 2. Außerdem wird durch den konisch zulaufenden Bereich erreicht, dass am freien Ende 4d der Steckhülse 4, die der Einschuböffnung E gegenüberliegt, eine verbreiterte Anlagefläche 4c für die Dichtung 10 geschaffen wird. Durch diese Anlagefläche 4c wird die Dichtung 10 in ihrer Lage zwischen dem Steckeinsatz 1 und dem Grundkörper 3 fixiert.

Außenseitig weist die Steckhülse 4 zumindest einen Rastabschnitt 9 auf. Der Rastabschnitt 9 ist dazu ausgebildet, in eine Ausnehmung oder Hinterschneidung des Grundkörpers 3 einzugreifen, um die Steckhülse 4 und damit den gesamten Steckeinsatz 1 im Grundkörper 3 zu fixieren. Der Rastabschnitt 9 kann umlaufend oder segmentiert ausgebildet sein. Vorzugsweise ist er auf der gleichen oder im Wesentlichen gleichen Höhe angeordnet wie innenseitig vorgesehene Fixierelementaufnahme 7. Im gezeigten Ausführungsbeispiel weist der Grundkörper 3 schlitzartige Durchbrüche 3.1 auf, die die Wandung des Grundkörpers 3 vollständig durchdringen. Durch diese Durchbrüche 3.1 wird innenseitig zumindest eine Kante gebildet, die durch den Rastabschnitt 9 hintergriffen werden kann. Dadurch kann die Steckhülse 4 und damit der gesamte Steckeinsatz 1 formschlüssig, insbesondere mittels einer Rastverbindung, im Grundkörper 3 fixiert werden.

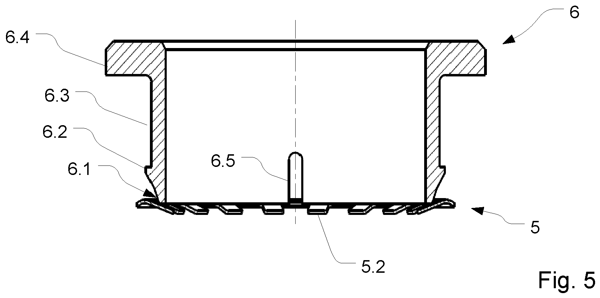

Fig. 5 zeigt ein auf das Fixierelement 5 aufgesetztes Löseorgan 6 in einer zentralen Längsschnittdarstellung.

Das Löseorgan 6 weist in Einschubrichtung des rohrförmigen Elements 2 gesehen einen Kragenabschnitt 6.4, einen an den Kragenabschnitt 6.4 anschließenden Hülsenabschnitt 6.3, einen an den Hülsenabschnitt 6.3 anschließenden Rastabschnitt 6.2 und einen an den Rastabschnitt 6.2 anschließenden Randabschnitt 6.1 auf.

Der Kragenabschnitt 6.4 ist durch eine radiale Verbreiterung gebildet. Über diesen Kragenabschnitt 6.4 kann das Löseorgan 6 manuell betätigt, insbesondere in die Steckhülse eingedrückt werden, um den Eingriff der Krallen 5.2 des Fixierelements 5 in das rohrförmige Element 2 aufzuheben. Der Hülsenabschnitt 6.3 ist beispielsweise rundrohrartig ausgebildet und bildet außenseitig eine Gleitfläche, die gegenüber dem Führungsabschnitt 4a der Steckhülse 4 zur Anlage gelangt. Mittels des Hülsenabschnitts 6.3 wird damit die Gleitführung des Löseorgans 6 realisiert.

Der Rastabschnitt 6.2 wird durch außenumfangsseitig vorgesehene Vorsprünge gebildet, die beispielsweise zwei kreisbogensegmentartig ausgebildete Kanten aufweisen. Der Rastabschnitt 6.2 greift, wie zuvor beschrieben, in die Ausnehmung 4b der Steckhülse 4 ein und begrenzt damit den axialen Verschiebeweg entgegen der Einschubrichtung des rohrförmigen Elements 2.

Von dem Rastabschnitt 6.2 in Richtung des Randabschnitts 6.1 ist das Löseorgan 6 zulaufend ausgebildet. Der Randabschnitt 6.1 ist zum Zusammenwirken mit dem Fixierelement 5 ausgebildet. Insbesondere kommt der Randabschnitt 6.1 bei Eindrücken des Löseorgans 6 in die Steckhülse 4 gegenüber den Krallen 5.2 des Fixierelements 5 zur Anlage und verformt diese dadurch reversibel, so dass die Fixierung des rohrförmigen Elements 2 im Steckeinsatz 1 gelöst wird.

Die Innenwandungsfläche des Löseorgans 6 ist vorzugsweise zylindrisch ausgebildet und insbesondere kantenfrei. Dies ist vorteilhaft, das die Innenwandungsfläche zumindest abschnittsweise den Durchführkanal DK begrenzt und damit das rohrförmige Element 2 beim Einführen in den Steckeinsatz 1 entlang dieser Innenwandungsfläche geschoben wird.

Das Löseorgan 6 weist vorzugsweise zumindest zwei Trennschnitte 6.5 auf. Diese Trennschnitte 6.5 verlaufen in axialer Richtung und Durchtrennen die Wandung des Löseorgans 6 vom Randabschnitt 6.1 her in Richtung des Kragenabschnitts 6.4. Vorzugsweise reichen die Trennschnitte 6.5 bis in den Hülsenabschnitt 6.3 hinein. Dadurch wird eine freiendseitige Flexibilität des Löseorgans 6 geschaffen, das Vorteile beim Zusammenwirken des Löseorgans 5 mit dem Fixierelement 6 bietet. Außerdem ist es durch die Trennschnitte 6.2 möglich, dass das Löseorgan 6 erst nach dem Zusammensetzen der Steckhülsenelemente 4.1, 4.2 zur Steckhülse 4 in diese eingedrückt wird.

Vorzugsweise ist die Steckhülse 4 und das Löseorgan 6 aus einem Kunststoff gebildet. Der Kunststoff kann insbesondere ein transparenter oder zumindest transluzenter Kunststoff sein, so dass durch die Wandung des Steckeinsatzes 1 hindurch in den Durchführkanal DK geblickt werden kann. Der Kunststoff kann insbesondere ein mittels Glasfasern verstärkter Kunststoff sein, um die Druckfestigkeit zu steigern.

Das Fixierelement 5 ist vorzugsweise durch Stanzen und Biegen aus einem metallischen Flachmaterial hergestellt. Das Fixierelement 5 kann vorzugsweise eine Wölbung aufweisen, deren konkave Seite im Eingebauten Zustand des Fixierelements 5 in Richtung der Einführöffnung E des Steckeinsatzes 1 gerichtet ist. Dadurch wird die Verformbarkeit des Fixierelements 5 und die Haptik bei der Betätigung des Löseorgans 6 verbessert.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Steckeinsatz
- 2: rohrförmiges Element
- 3: Grundkörper
- 3.1: Druchbruch
- 3.2: Anschlag
- 4: Steckhülse
- 4.1: erstes Steckhülsenelement
- 4.1.1: Fügefläche
- 4.2: zweites Steckhülsenelement
- 4a: Führungsabschnitt
- 4b: Ausnehmung
- 4c: Anlagefläche
- 4d: freies Ende
- 4e: freies Ende
- 4f: Freiraum
- 5: Fixierelement
- 5.1: Randabschnitt
- 5.2: Krallen
- 6: Löseorgan
- 6.1: Randabschnitt
- 6.2: Rastabschnitt
- 6.3: Hülsenabschnitt
- 6.4: Kragenabschnitt
- 6.5: Trennabschnitt
- 7: Fixierelementaufnahme
- 8: Zapfenverbindung
- 8.1: Ausnehmung
- 8.2: Zapfen
- 9: Rastabschnitt
- 10: Dichtung

- DK: Durchführkanal
- E: Einführöffnung

## Patentansprüche

1. Steckeinsatz ausgebildet zur Einbringung in einen Grundkörper (3), wobei der Steckeinsatz (1) zur lösbaren Kopplung eines rohrförmigen Elements (2) mit dem Grundkörper (3) ausgebildet ist, wobei der Steckeinsatz (1) eine Steckhülse (4), ein Fixierelement (5) und ein Löseorgan (6) umfasst, wobei das Fixierelement (5) zur lösbaren Fixierung eines über eine Einführöffnung (E) eingeschobenen, rohrförmigen Elements (2) in der Steckhülse (4) ausgebildet ist und das Löseorgan (6) mit dem Fixierelement (5) derart zusammenwirkt, dass durch eine axiale Verschiebung des Löseorgans (6) relativ zur Steckhülse (4) die Fixierung des rohrförmigen Elements (2) gelöst wird, wobei die Steckhülse (4) aus zumindest zwei in Umfangsrichtung aneinander anschließenden Steckhülsenelementen (4.1, 4.2) gebildet und durch die aneinander anschließenden Steckhülsenelemente (4.1, 4.2) zu einer geschlossenen, im Querschnitt kreisringförmigen Steckhülse (4) zusammensetzbar ist, wobei die Steckhülsenelemente (4.1, 4.2) aus Kunststoff gebildet sind, wobei die Steckhülse (4) in deren Innenraum eine Fixierelementaufnahme (7) aufweist, mittels der das Fixierelement (5) im zusammengesetzten Zustand der Steckhülse (4) formschlüssig fixiert ist und wobei die Steckhülse (4) im zusammengesetzten Zustand eine Gleitführung für die axiale Verschiebung des Löseorgans (6) bildet.

2. Steckeinsatz nach Anspruch 1, **dadurch gekennzeichnet, dass** die Steckhülsenelemente (4.1, 4.2) durch Verbindungsmittel im zusammengesetzten Zustand derart relativ zueinander fixierbar sind, dass diese im Zusammenwirken miteinander die umfangsseitig geschlossene Steckhülse (4) bilden.

3. Steckeinsatz nach Anspruch 2, **dadurch gekennzeichnet, dass** die Verbindungsmittel zumindest eine Zapfenverbindung (8) und/oder zumindest eine Rastverbindung umfassen.

4. Steckeinsatz nach einem der vorhergehenden Ansprüche, **dadurch gekennzeichnet, dass** die Steckhülsenelemente (4.1, 4.2) identisch ausgebildet sind.

5. Steckeinsatz nach einem der vorhergehenden Ansprüche, **dadurch gekennzeichnet, dass** die Steckhülse (4) in Umfangsrichtung segmentiert und in axialer Richtung nicht segmentiert ist.

6. Steckeinsatz nach einem der vorhergehenden Ansprüche, **dadurch gekennzeichnet, dass** ein erstes Steckhülsenelement (4.1) an einer Fügefläche (4.1.1), an der das erste Steckhülsenelement (4.1) mit einem zweiten Steckhülsenelement (4.2) zur Anlage gelangt, zumindest eine sacklochartige Ausnehmung (8.1) und/oder einen Zapfen (8.2) aufweist, wobei die sacklochartige Ausnehmung (8.1) des ersten Steckhülsenelements (4.1) mit einem Zapfen (8.2) des zweiten Steckhülsenelements (4.2) und/oder der Zapfen (8.2) des ersten Steckhülsenelements (4.1) mit einer Ausnehmung (8.1) des zweiten Steckhülsenelements (4.2) zur Bildung einer formschlüssigen Verbindung zusammenwirkt.

7. Steckeinsatz nach einem der vorhergehenden Ansprüche, **dadurch gekennzeichnet, dass** die Steckhülse (4) außenumfangsseitig zumindest eine Rastabschnitt (9) aufweist, mittels der der Steckeinsatz (1) in dem Grundkörper (3) rastend fixierbar ist.

8. Steckeinsatz nach einem der vorhergehenden Ansprüche, **dadurch gekennzeichnet, dass** die Fixierelementaufnahme (7) in den Steckhülsenelementen (4.1, 4.2) jeweils durch eine Ausnehmung gebildet ist, in die das Fixierelement (5) randseitig mit einem Teilumfangsbereich einsetzbar ist, und zwar derart, dass ein außenumfangsseitiger Randabschnitt (5.1) des Fixierelements (5) in die Ausnehmung eintaucht und dadurch das Fixierelement (5) im zusammengesetzten Zustand der Steckhülse (4) durch Zusammenwirken der Steckhülsenelemente (4.1, 4.2) fixiert ist.

9. Steckeinsatz nach einem der vorhergehenden Ansprüche, **dadurch gekennzeichnet, dass** das Löseorgan (6) einen Hülsenabschnitt (6.3) aufweist und dass die Gleitführung für das Löseorgan (6) durch ein Zusammenwirken des Hülsenabschnitts (6.3) des Löseorgans (6) mit einem Führungsabschnitt (4a) der Steckhülse (4) gebildet wird, wobei der Führungsabschnitt (4a) den Hülsenabschnitt (6.3) des Löseorgans (6) umfangsseitig umschließt.

10. Steckeinsatz nach einem der vorhergehenden Ansprüche, **dadurch gekennzeichnet, dass** das Löseorgan (6) außenseitig zumindest einen Rastabschnitt (6.2) aufweist und dass die zumindest zwei Steckhülsenelemente (4.1, 4.2) an deren Innenumfangsfläche jeweils eine Ausnehmung (4b) aufweisen, die mit dem Rastabschnitt (6.2) des Löseorgans (6) derart zusammenwirkt, dass der Rastabschnitt (6.2) in die Ausnehmung (4b) eingreift, um dadurch den Verschiebeweg des Löseorgans (6) zu beschränken.

11. Steckeinsatz nach einem der vorhergehenden Ansprüche, **dadurch gekennzeichnet, dass** die Steckhülse (4) im Bereich des freien Endes (4d), das der Einführöffnung (E) gegenüberliegt, eine Anlagefläche (4c) für eine Dichtung (10) aufweist, mittels der der Übergang zwischen dem rohrförmigen Element (2) und dem Grundkörper (3) abgedichtet wird.

12. Steckeinsatz nach einem der vorhergehenden Ansprüche, **dadurch gekennzeichnet, dass** die Steckhülse (4) zwischen der Fixierelementaufnahme (7) und dem freien Ende (4d), das der Einführöffnung (E) gegenüberliegt, innenseitig zulaufend ausgebildet ist, so dass sich der Innenquerschnitt der Steckhülse (4) zum freien Ende (4d) hin verjüngt.

13. Steckeinsatz nach einem der vorhergehenden Ansprüche, **dadurch gekennzeichnet, dass** das Löseorgan (6) im Bereich des freien Endes, das in der Steckhülse (4) aufgenommen ist, einen oder mehrere Trennschnitte (6.5) aufweist, die die Wandung des Löseorgans (6) durchtrennen und damit eine freiendseitige Segmentierung des Löseorgans (6) bewirken.

14. Steckeinsatz nach einem der vorhergehenden Ansprüche, **dadurch gekennzeichnet, dass** das Fixierelement (5) als Krallenring ausgebildet ist, der mehrere von einem Randabschnitt (5.1) radial nach innen abstehende Krallen (5.2) aufweist, die sich zur Fixierung des rohrförmigen Elements (2) mit der Wandung des rohrförmigen Elements (2) verhaken und durch das Löseorgan (6) derart reversibel verbiegbar sind, dass dadurch die Fixierung des rohrförmigen Elements (2) gelöst wird.

15. Steckeinsatz nach einem der vorhergehenden Ansprüche, **dadurch gekennzeichnet, dass** das Fixierelement (5) durch Stanzen und Biegen aus einem metallischen Flachmaterial hergestellt ist.
